# EUROPÄISCHE PATENTSCHRIFT

(11) **EP 2 120 315 B1**
(45) Veröffentlichungstag und Bekanntmachung des Hinweises auf die Patenterteilung: **26.02.2014**
(21) Anmeldenummer: 08009028.5
(22) Anmeldetag: 15.05.2008
(51) Int. Cl.: H02K 7/08, H02K 7/00, H02K 5/173, F16D 1/10, F16D 1/076, F16C 35/063

(54) **Antriebseinrichtung**
Drive device
Dispositif d'entraînement

(43) Veröffentlichungstag der Anmeldung: 18.11.2009
(73) Patentinhaber: Siemens Aktiengesellschaft, 80333 München (DE)
(72) Erfinder: Eckel, Ulrich, 91341 Röttenbach (DE); Schäufele, Stephan, 91052 Erlangen (DE); Waider, Sebastian, 36100 Petersberg (DE)

(56) Entgegenhaltungen:
- GB-A- 1 520 046
- US-A- 3 586 357
- US-A- 5 584 584
- US-A1- 2003 184 173
- US-A1- 2004 130 224

## Beschreibung

Die Erfindung betrifft eine Antriebseinrichtung.

Aus der DE 103 57 884 A1 und der DE 103 20 599 A1 sind Antriebseinrichtungen zum Antrieb von Lasten bekannt, bei denen mit Hilfe einer komplex aufgebauten Koppeleinrichtung eine Kopplung zwischen einer Lastwelle einer anzutreibenden Last und der Motorwelle eines elektrischen Motors realisiert wird. Der Aufbau der handelsüblichen, mittels solcher Koppeleinrichtungen realisierbaren Verbindung zwischen der Motorwelle und der Lastwelle ist, wie schon gesagt, komplex aufgebaut, was eine entsprechende große Baugröße zur Folge hat. Im Weiteren sind auch noch in den Motor integrierte Koppeleinrichtungen z.B. aus der DE 102 30 876 B3 bekannt.

Aus dem Stand der Technik bekannte Koppeleinrichtungen weisen den Nachteil auf, dass sie nur sehr schwer und aufwändig zu warten sind. So ist insbesondere ein Austausch der Koppeleinrichtungen sehr zeitaufwändig.

Weiterhin sind auch noch so genannte dreiteilige Lager aus der Internetseite www.imo.de/Drehverbindungen.772.0.html der Firma IMO bekannt. Diese zeichnen sich dadurch aus, dass sie sowohl axiale als auch radiale Kräfte aufnehmen können und eine Dichtung aufweisen, die den Außenring gegen den Innenring des Lagers abdichtet.

Aus der Druckschrift US 2003/0184173 A1 ist ein Elektromotor bekannt, der ein Motorgehäuse aufweist, an dem der Rotor gelagert ist. Eines der beiden Lager ragt teilweise aus dem Gehäuse. An der Motorwelle ist ein Flansch angeordnet, an den ein Rad eines Fahrzeugs befestigt werden kann.

Die Druckschrift US 2004/0130224 A1 offenbart einen Motor, der eine Motorwelle aufweist. Zur Übertragung eines Drehmoments weist die Motorwelle eine Verzahnung auf.

Ferner beschreibt die Druckschrift US 3,586,357 ein Kopplungssystem für sich drehende Teile. Speziell sind Lagerinnenringe an ihren axialen Stirnseiten mit Zähnen versehen, über die ein Drehmoment übertragen wird.

Der Erfindung liegt die Aufgabe zugrunde, eine Antriebseinrichtung zu schaffen, die eine einfach aufgebaute Koppeleinrichtung zur Ankoppelung einer Lastwelle aufweist, die schnell ausgetauscht werden kann.

Diese Aufgabe wird gelöst durch eine Antriebseinrichtung nach Anspruch 1.

Vorteilhafte Ausbildungen der Erfindung ergeben sich aus den abhängigen Ansprüchen.

Es erweist sich als vorteilhaft, wenn der Außenring gegen den Innenring abdichtet ist. Hierdurch kann auf die Verwendung von zusätzlich am Lager angebrachten Bauteilen zur Abdichtung verzichtet werden.

Außerdem erweist es sich als vorteilhaft, dass der Innenring auf der der Lastwelle zugewandten Seite eine geometrische Anorderung zur formschlüssigen Verbindung des Innenrings mit der Lastwelle aufweist. Hierdurch wird auf besonders einfache Art und Weise eine Verbindung von Lastwelle und Innenring realisiert.

Weiter erweist es sich als vorteilhaft, wenn die geometrische Anorderung zur formschlüssigen Verbindung des Innenrings mit der Lastwelle als Verzahnung ausgebildet ist. Eine Ausbildung der geometrische Anorderung als Verzahnung stellt eine besonders einfache Ausbildung dar.

Ferner erweist es sich als vorteilhaft, wenn der Motor auf der dem Lager zugewandten Seite des Motors kein motorinternes Lager zur Lagerung der Motorwelle aufweist. Hierdurch können die zum Bau des Motors benötigten Bauteile reduziert werden.

Ferner erweist es sich als vorteilhaft, wenn der Motor auf der dem Lager abgewandten Seite des Motors ein Loslager zur Lagerung der Motorwelle aufweist. Da das außerhalb des Motors angeordnete Lager axiale Kräfte aufnehmen kann, kann auf der dem Lager abgewandten Seite des Motors das notwendige Lager zur Lagerung der Motorwelle als Loslager ausgebildet sein.

Weiter erweist es sich als vorteilhaft, dass der Innenring des Lagers mit einer Scheibe verbunden ist, wobei die axiale Kraft von der Lastwelle über die Scheibe auf den Innenring übertragbar ist. Hierdurch wird ein besonders einfacher Austausch der Lastwelle ermöglicht.

Weiter erweist es sich als vorteilhaft, eine Werkzeugmaschine, Produktionsmaschine und/oder einen Roboter mit der erfindungsgemäßen Antriebseinrichtung auszubilden.

Ein Ausführungsbeispiel der Erfindung ist in der Zeichnung dargestellt und wird im Folgenden näher erläutert. Dabei zeigt:
- FIG 1: eine Ausbildung einer nicht beanspruchten Antriebseinrichtung, die mit einer Lastwelle verbunden ist und
- FIG 2: eine weitere Ausbildung der erfindungsgemäßen Antriebseinrichtung, die mit einer Lastwelle verbunden ist.

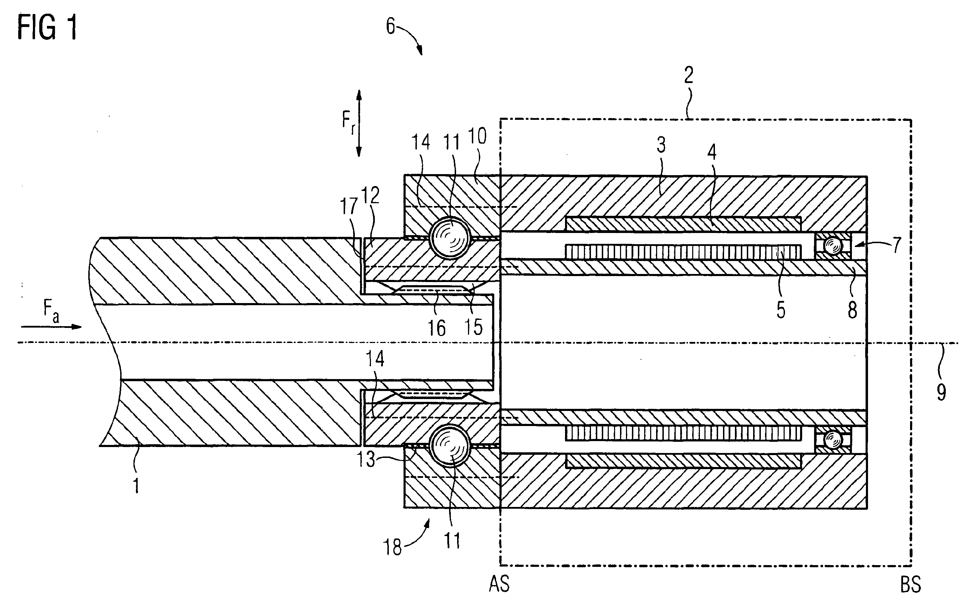

In FIG 1 ist zum besseren Verständnis der Erfindung schematisiert eine nicht beanspruchte Antriebseinrichtung 6, die mit einer Lastwelle 1 verbunden ist, dargestellt. Die handelsüblich bekannte Koppeleinrichtung zur Kopplung der Lastwelle 1 mit der Motorwelle 8 eines Motors 2 ist in Form eines Lagers 18 realisiert. Die Ankopplung wird solchermaßen mittels eines außerhalb des Motors 2 angeordneten Lagers realisiert.

Das Lager 18 weist einen Außenring 10, einen Innenring 12 und mehrere Wälzkörper 11 auf, die als Kugeln ausgebildet sind. Der Außenring 10 ist gegenüber dem Innenring 12 mittels einer einzelnen oder mehrerer Dichtungen 13 abgedichtet, so dass keine Schmierflüssigkeit von den Walzkörpern nach außen aus dem Lager dringen kann. Hierdurch können außerhalb des Lagers angebrachte zusätzliche Dichtungsbauteile entfallen.

Der Außen- und Innenring umschließen die Walzkörper fast vollständig. Das Lager kann in Bezug auf eine Drehachse 9 sowohl eine axiale Kraft Fₐ als auch eine radiale Kraft Fᵣ von der Lastwelle 1 auf den Motors 2 übertragen. Die axiale Kraft Fₐ und die radialen Kraft Fᵣ werden dabei, z.B. von einer in FIG 1 der Übersichtlichkeit halber nicht dargestellten Last, beim Betrieb der Antriebseinrichtung auf die Lastwelle, die mit der Last verbunden ist, ausgeübt.

Der Innenring 12 weist auf der der Lastwelle zugewandten Seite eine an die Lastwelle 1 angepasste geometrische Anorderung zur formschlüssigen Verbindung der Lastwelle mit dem Innenring auf. Die geometrische Anorderung kann z.B. als eine Verzahnung 15 ausgebildet sein. Die Lastwelle 1 weist eine entsprechende an die Verzahnung 15 angepasste Gegenverzahnung 16 auf. Alternativ sind hier jedoch auch andere Verbindungstechniken denkbar.

Weiterhin weist die Antriebseinrichtung 6 einen Motor 2 auf, wobei die zum Motor 2 gehörenden Bauelemente in FIG 1 mittels einer strichpunktierten Linie eingerahmt sind. Der Motor 2 weist ein ruhendes Bauteil, das als ein Motorgehäuse 3 ausgebildet ist, auf. Ein Stator 4 des Motors 2 ist mit dem Motorgehäuse 3 verbunden. Weiterhin weist der Motor 2 die Motorwelle 8 auf, die als Hohlwelle ausgebildet ist. Die Motorwelle 8 ist mit einem Rotor 5 verbunden. Auf der dem Lager 18 abgewandten Seite BS des Motors 2 weist der Motor 2 ein Loslager zur Lagerung der Motorwelle 8 auf.

Der Motor 2 weist auf der dem Lager zugewandten Seite AS des Motors 2 kein motorinternes Lager zur Lagerung der Motorwelle auf, da die Lagerung der Motorwelle 8 auf dieser Seite des Motors durch das Lager 18 realisiert ist.

Der Außenring 10 ist direkt mit einem ruhenden Bauteil des Motors 2, d.h. im Ausführungsbeispiel direkt mit dem Motorgehäuse 3, mittels durch den Außenring 10 hindurchgehenden Schrauben 14 direkt mit dem Motorgehäuse 3 verbunden. Weiterhin ist der Innenring 12 des Lagers 18 direkt mit einem rotierenden Bauteil des Motors, das durch die Motorwelle 8 gebildet wird, mittels durch den Innenring 12 hindurchgehender Schrauben 19 direkt mit der Motorwelle 8 verbunden.

Das vom Motor 2 erzeugte Drehmoment wird von der Motorwelle 8 auf den Innenring 12 übertragen. Infolge wird das im Motor 2 erzeugte Drehmoment von der Motorwelle 8 über den Innenring 12 auf die Lastwelle 1 übertragen.

Mit Hilfe der formschlüssigen Verbindung zwischen Innenring und Lastwelle wird eine kraftschlüssige Verbindung zur Übertragung des Drehmoments des Motors über den Innenring 12 auf die Lastwelle 1 gewährleistet. Die Übertragung der axialen Kräfte von der Lastwelle 1 erfolgt über die Auflagefläche 17 des Innenrings 12, wobei der Übersichtlichkeit halber in FIG 1 zwischen Auflagefläche 17 und Lastwelle 1 ein kleiner Spalt dargestellt ist, der aber bei Auftreten der axialen Kräfte verschwindet. Die Ankoppelung von Lastwelle 1 an die Motorwelle 8 wird durch das Lager 18 realisiert. Die sonst handelsübliche, komplex aufgebaute Koppeleinrichtung wird durch das Lager 18 realisiert. Das Lager 18 weist gegenüber handelsüblich verwendeten Koppeleinrichtungen ein deutlich geringeres Gewicht auf und erlaubt eine einfache Montage und kann einfach und schnell ausgetauscht werden. Eine Stückprüfung von Motor 2 und Lager 18 kann bereits beim Motorenhersteller erfolgen, wobei der bei handelsüblichen Koppeleinrichtungen notwendige Zwischenschritt der Stückprüfung bei einem Getriebehersteller nicht mehr notwendig ist.

Im Allgemeinen ist das Lager dabei insbesondere derart ausgebildet, dass vom Lager eine axial Kraft Fₐ von größer als 20 kN und eine radiale Kraft Fᵣ von größer als 1,5 kN übertragbar sind. Die vom Lager übertragbare axiale und radiale Kraft kann jedoch jeweils auch kleiner oder größer sein.

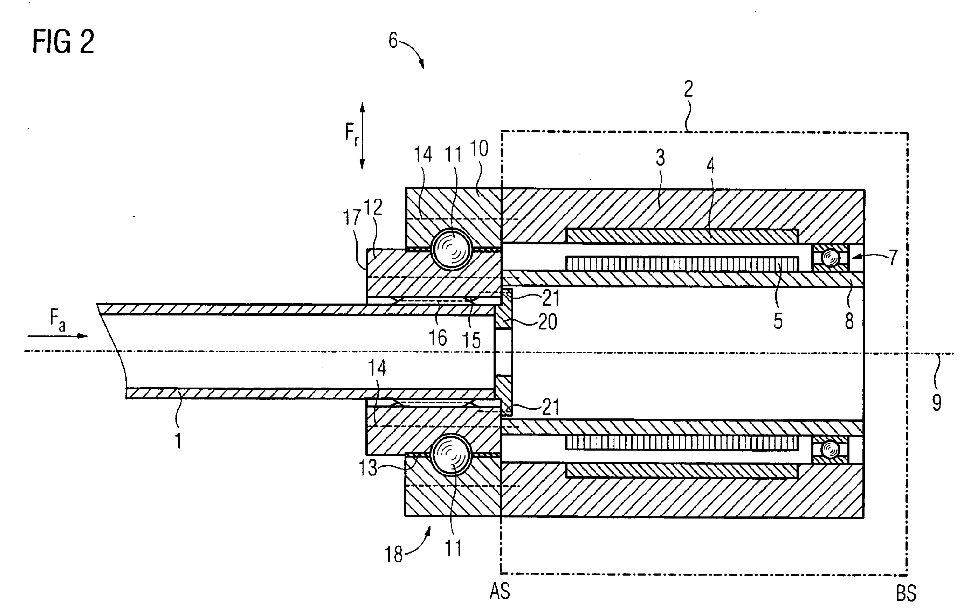

In FIG 2 ist eine Ausbildung der Erfindung dargestellt. Die in FIG 2 dargestellte Ausführungsform entspricht im Grundaufbau im Wesentlichen der vorstehend in FIG 1 beschriebenen Antriebseinrichtung. Gleiche Elemente sind daher in FIG 2 mit den gleichen Bezugszeichen versehen wie in FIG 1. Der wesentliche Unterschied besteht darin, dass durch entsprechende Ausführung der Lastwellenaufnahme, mittels der Scheibe 20, die Lastwelle auch durch die als Hohlwelle ausgeführte Motorwelle 8 des Motors, durch die Motorwelle 8 hindurchgeführt, ein- und ausgebaut werden kann. Die Scheibe 20 ist dabei über Schrauben 21 mit dem Innenring 12 verbunden. Die Übertragung der axialen Kraft Fₐ von der Lastwelle 1 erfolgt über die Scheibe 20 auf den Innenring 12. Der Durchmesser der Lastwelle 1 muss dabei kleiner sein als der Durchmesser der der Motorwelle 8. Diese Art des Ein- und Ausbaus der Lastwelle 1 erweist sich als besonders vorteilhaft bei Extruderhauptantrieben.

Die Erfindung schafft im Rahmen des Ausführungsbeispiels eine Antriebseinrichtung 6, wobei die Antriebseinrichtung einen elektrischen Motor 2 und ein außerhalb des Motors angeordnetes Lager zur Ankoppelung einer Lastwelle 1 an eine Motorwelle 8 des Motors 2 aufweist, wobei das Lager 18 einen Außenring 10, einen Innenring 12 und mehrere Wälzkörper 11, die zwischen Außenring 10 und Innenring 12 angeordnet sind aufweist, wobei das Lager 18 derart ausgebildet ist, dass vom Lager 18 eine axiale und eine radiale Kraft von der Lastwelle 1 auf den Motor 2, insbesondere auf das Motorgehäuse 3 des Motor 2, übertragbar sind, wobei der Außenring 10 des Lagers 18 direkt mit einem ruhenden Bauteil 3 des Motors 2 verbunden ist, wobei der Innenring 12 des Lagers 18 direkt mit einem rotierenden Bauteil 8 des Motors 2 verbunden ist, wobei der Innenring 12 des Lagers 7 direkt mit der Lastwelle 1 verbindbar ist, wobei ein vom Motor 2 erzeugtes Drehmoment von der Motorwelle 8 auf den Innenring 12 übertragen wird.

## Patentansprüche

1. Antriebseinrichtung (6), wobei die Antriebseinrichtung einen elektrischen Motor (2) und ein außerhalb des Motors (2) angeordnetes Lager (7) aufweist, mit dem eine Lastwelle (1) an eine Motorwelle (8) des Motors (2) angekoppelt ist, wobei das Lager (18) einen Außenring (10), einen Innenring (12) und mehrere Wälzkörper (11), die zwischen Außenring (10) und Innenring (12) angeordnet sind aufweist, wobei das Lager (18) derart ausgebildet ist, dass vom Lager (18) eine axiale und eine radiale Kraft (Fₐ, Fᵣ) von der Lastwelle (1) auf den Motor (2) übertragbar sind, wobei der Außenring (10) des Lagers (18) mit einem ruhenden Bauteil (3) des Motors (2) verbunden ist, wobei der Innenring (12) des Lagers (18) mit einem rotierenden Bauteil (8) des Motors (2) verbunden ist, wobei der Innenring (12) des Lagers (7) mit der Lastwelle (1) verbunden ist, wobei ein vom Motor (2) erzeugtes Drehmoment von der Motorwelle (8) auf den Innenring (12) übertragen wird,
**dadurch gekennzeichnet , dass** der Innenring (12) auf der der Lastwelle (1) zugewandten Seite eine geometrische Anordnung zur formschlüssigen Verbindung des Innenrings (12) mit der Lastwelle (1) aufweist, wobei
der Innenring (12) des Lagers (7) mit einer Scheibe (20) verbunden ist, wobei die axiale Kraft (Fₐ) von der Lastwelle über die Scheibe (20) auf den Innenring (12) übertragbar ist und wobei
die Lastwelle durch die als Hohlwelle ausgeführte Motorwelle des Motors zum Einbau und Ausbau durchführbar ist.

2. Antriebseinrichtung (6) nach Anspruch 1, **dadurch gekennzeichnet , dass der** Außenring (10) gegen den Innenring (12) abdichtet ist.

3. Antriebseinrichtung (6) nach Anspruch **1 oder 2**,
**dadurch gekennzeichnet , dass** die geometrische Anorderung zur formschlüssigen Verbindung des Innenrings (12) mit der Lastwelle (1) als Verzahnung (15) ausgebildet ist.

4. Antriebeinrichtung (6) nach einem der vorhergehenden Ansprüche, **dadurch gekennzeichnet , dass** der Motor (2) auf der dem Lager (18) zugewandten Seite (AS) des Motors (2) kein motorinternes Lager (7) zur Lagerung der Motorwelle (8) aufweist.

5. Antriebeinrichtung (6) nach einem der vorhergehenden Ansprüche, **dadurch gekennzeichnet , dass** der Motor (2) auf der dem Lager (18) abgewanden Seite (BS) des Motors (2) ein Loslager (7) zur Lagerung der Motorwelle (8) aufweist.

6. Werkzeugmaschine, Produktionsmaschine und/oder Roboter mit einer Antreibseinrichtung (6) nach einem der vorhergehenden Ansprüche.

## Claims

1. Drive facility (6), with the drive facility having an electric motor (2) and a bearing (7) arranged outside the motor (2), with which a load shaft (1) is coupled to an engine shaft (8) of the motor (2), with the bearing (18) having an outer ring (10), an inner ring (12) and several rolling elements (11), which are arranged between the outer ring (10) and the inner ring (12), with the bearing (18) being embodied such that an axial and a radial force (Fₐ,Fᵣ) can be transmitted by the bearing (18) from the load shaft (1) onto the motor (2), with the outer ring (10) of the bearing (18) being connected to a stationary component (3) of the motor (2), with the inner ring (12) of the bearing (18) being connected to a rotating component (8) of the motor (2), with the inner ring (12) of the bearing (7) being connected to the load shaft (1), with a torque generated by the motor (2) being transmitted from the engine shaft (8) onto the inner ring (12),
**characterised in that**
the inner ring (12) has a geometric arrangement for the form-fit connection of the inner ring (12) to the load shaft (1) on the side facing the load shaft (1), wherein
the inner ring (12) of the bearing (7) is connected to a disk (20), with the axial force (Fₐ) being transferable from the load shaft via the disk (20) onto the inner ring (12) and wherein
the load shaft can be passed through the engine shaft of the motor embodied as a hollow shaft for assembly and disassembly purposes.

2. Drive facility (6) according to claim 1, **characterised in that**, the outer ring (10) is sealed off from the inner ring (12).

3. Drive facility (6) according to claim 1 or 2, **characterised in that** the geometric arrangement for the form-fit connection of the inner ring (12) to the load shaft (1) is embodied as toothing (15).

4. Drive facility (6) according to one of the preceding claims, **characterised in that** on the side (AS) of the motor (2) facing the bearing (18), the motor (2) has no bearing (7) inside the motor for mounting the engine shaft (8).

5. Drive facility (6) according to one of the preceding claims, **characterised in that** the motor (2) has a loose bearing (7) for mounting the engine shaft (8) on the side of (BS) of the motor (2) facing away from the bearing (18).

6. Tool machine, production machine and/or robot comprising a drive facility (6) according to one of the preceding claims.

## Revendications

1. Dispositif ( 6 ) d'entraînement, dans lequel le dispositif ( 6 ) d'entraînement a un moteur ( 2 ) électrique et, disposé à l'extérieur du moteur ( 2 ), un palier ( 7 ), par lequel un arbre ( 1 ) de charge est accouplé à un arbre ( 8 ) du moteur ( 2 ), le palier ( 18 ) ayant une bague ( 10 ) extérieure, une bague ( 12 ) intérieure et plusieurs organes ( 11 ) de roulement, qui sont disposés entre la bague ( 10 ) extérieure et la bague ( 12 ) intérieure, le palier ( 18 ) étant constitué de manière à pouvoir transmettre, par le palier ( 18 ), une force ( Fₐ ) axiale et une force ( Fᵣ ) radiale de l'arbre ( 1 ) de charge au moteur ( 2 ), la bague ( 10 ) extérieure du palier ( 18 ) étant reliée à un élément ( 3 ) fixe du moteur ( 2 ), la bague ( 12 ) intérieure du palier ( 18 ) étant reliée à un élément ( 8 ) tournant du moteur ( 2 ), la bague ( 12 ) intérieure du palier ( 7 ) étant reliée à l'arbre ( 1 ) de charge, un couple de rotation produit par le moteur ( 2 ) étant transmis de l'arbre ( 8 ) du moteur à la bague ( 12 ) intérieure,
**caractérisé en ce que** la bague ( 12 ) intérieure a, du côté tourné vers l'arbre ( 1 ) de charge, un agencement géométrique pour la liaison par complémentarité de forme de la bague ( 12 ) intérieure à l'arbre ( 1 ) de charge, dans lequel
la bague ( 12 ) intérieure du palier ( 7 ) est reliée à une rondelle ( 20 ), la force ( Fₐ ) axiale pouvant être transmise de l'arbre de charge à la bague ( 12 ) intérieure par la rondelle ( 20 ) et dans lequel
l'arbre de charge peut être traversé, pour le montage et pour le démontage, par l'arbre du moteur réalisé sous la forme d'un arbre creux.

2. Dispositif ( 6 ) d'entraînement suivant la revendication 1, **caractérisé en ce que** la bague ( 10 ) extérieure est rendue étanche vis-à-vis de la bague ( 12 ) intérieure.

3. Dispositif ( 6 ) d'entraînement suivant la revendication 1 ou 2, **caractérisé en ce que** l'agencement géométrique, pour la liaison par complémentarité de forme de la bague ( 12 ) intérieure à l'arbre ( 1 ) de charge, est constitué sous la forme d'une denture ( 15 ).

4. Dispositif ( 6 ) d'entraînement suivant l'une des revendications précédentes, **caractérisé en ce que** le moteur ( 2 ) n'a pas, du côté ( AS ) du moteur ( 2 ) tourné vers le palier ( 18 ) du moteur ( 2 ), de palier ( 7 ) interne au moteur pour supporter l'arbre ( 8 ) du moteur.

5. Dispositif ( 6 ) d'entraînement suivant l'une des revendications précédentes, **caractérisé en ce que** le moteur ( 2 ) a, du côté ( BS ) du moteur ( 2 ) éloigné du palier ( 18 ) du moteur ( 2 ), un palier ( 7 ) libre pour supporter l'arbre ( 8 ) du moteur.

6. Machine-outil, machine de production et/ou robot ayant un dispositif ( 6 ) d'entraînement suivant l'une des revendications précédentes.
